# EUROPEAN PATENT SPECIFICATION

(11) **EP 4 643 642 B1**
(45) Date of publication and mention of the grant of the patent: **08.07.2026**
(21) Application number: 24826556.3
(22) Date of filing: 29.03.2024
(51) Int. Cl.: A01M 1/06, A01M 1/02

(54) **MOSQUITO TRAPPING DEVICE WITH CARBON DIOXIDE ATTRACTION**
MOSKITOFANGVORRICHTUNG MIT KOHLENDIOXIDATTRAKTION
DISPOSITIF DE PIÈGE À MOUSTIQUES À ATTRACTION DE DIOXYDE DE CARBONE

(30) Priority: 08.03.2024 CN 202420454969 U
(43) Date of publication of application: 05.11.2025
(73) Proprietor: Foshan GreenYellow Electric Technology Co., Ltd., Foshan, Guangdong 528300 (CN)
(72) Inventor: WANG, Ruofei, Foshan, Guangdong 528300 (CN); WEN, Shanheng, Foshan, Guangdong 528300 (CN); QIN, Xinzong, Foshan, Guangdong 528300 (CN)
(74) Representative: Bayramoglu et al.
(86) International application number: PCT/CN2024/084722
(87) International publication number: WO 2025/184951

(56) References cited:
- CN-U- 206 658 906
- CN-U- 206 658 906
- CN-U- 206 923 546
- CN-U- 206 923 546
- CN-U- 211 631 465
- CN-U- 220 630 759
- CN-U- 221 864 298
- KR-A- 20180 054 140
- US-A1- 2010 212 211
- US-A1- 2010 212 211
- US-A1- 2018 288 992

## Description

### TECHNICAL FIELD

The present disclosure relates to the field of mosquito trapping devices, and in particular to a carbon dioxide-lured mosquito trapping device.

### BACKGROUND

Mosquito traps are also known as mosquito capturing devices, mosquito exterminators, ecological mosquito traps, ecological mosquito exterminators, and ecological mosquito extermination systems.

As illustrated in patent documents with application numbers 201921978518.7, 201921721518.9 and the like, mosquito traps of the prior art, to achieve good effects of mosquito trapping and extermination, usually have a range of attractant features such as odors, scents, sounds, colors, light, temperatures, humidity, electric shock, and the like, which have complex structures and extremely high costs. The most common and widely used mosquito capturing and exterminating devices are light-lured mosquito capturing and exterminating devices, which require use of mosquito-lured lamps or mosquito-exterminating lamps, and are still relatively complex in structure. CN206923546U discloses a multi -way induced mosquito ware of catching, including inlet air channel, the passageway of airing exhaust, revellent and carbon dioxide released device and main part, inlet air channel, the passageway of airing exhaust, revellent and carbon dioxide released device all are located the main part, and inlet air channel is equipped with the air intake, and the passageway of airing exhaust is equipped with the air exit, and revellent and carbon dioxide released device are all corresponding with the air exit position, and the air intake is near the air exit.

### SUMMARY

An objective of the present disclosure is to provide a carbon dioxide-lured mosquito trapping device, so as to solve at least one of the above problems.

In an aspect, the present disclosure provides a carbon dioxide-lured mosquito trapping device, and the device includes a main body, as well as a net cover assembly, a fan, and a mosquito storage box sequentially arranged from top to bottom in a height direction of the main body, where the net cover assembly is provided with an air inlet part and an air outlet part, and under the action of the fan, air enters the mosquito storage box from the air inlet part and is finally discharged from the air outlet part;
a carbon dioxide mosquito luring part configured for generating carbon dioxide gas arranged on a side of the main body is further included; and
the carbon dioxide mosquito luring part at least includes a discharge hole formed in the net cover assembly for outputting carbon dioxide gas.

Therefore, the present disclosure provides a mosquito trapping device of a brand new structure, under the action of the fan of the mosquito trapping device, air enters the mosquito storage box sequentially through the air inlet part and is then blown out from the air outlet part, the air duct structure formed can be used to effectively capture surrounding mosquitoes into the mosquito storage box, and the fan is an only electricity utilization component for mosquito trapping, without any other complex mosquito trapping or exterminating facilities; and the carbon dioxide mosquito luring part is arranged to simulate human respiration, and only carbon dioxide gas is available for mosquito luring, and is diffused under the action of the air duct, with a mosquito luring effect achieved. Despite of the simple overall structure and the low cost, the device of a simple structure achieves mosquito luring and trapping functions.

The net cover assembly is arranged at an upper end part of the main body and forms a first accommodating cavity together with the main body, and the net cover assembly includes a first net cover, a second net cover, and a third net cover, where the first net cover is mounted at the upper end part of the main body, the second net cover is mounted around a middle part of the first net cover in a sleeved manner and located at an outer periphery of the fan, the third net cover is mounted on top of the second net cover and located directly above the fan, and the discharge hole is formed in the first net cover;
the air inlet part includes a first air inlet part arranged on the third net cover and matches the fan, and a second air inlet part arranged in the mosquito storage box and located directly below the fan;
the air outlet part includes a first air outlet part arranged on the first net cover and communicated with the first accommodating cavity, and a third air outlet part arranged in the mosquito storage box and communicated with the first accommodating cavity; and
when the fan works, air enters the mosquito storage box sequentially through the first air inlet part and the second air inlet part, and then is blown out from the first air outlet part after sequentially passing through the third air outlet part and the first accommodating cavity, which forms a first air duct.

The air outlet part further includes a second air outlet part arranged on the second net cover and communicated with the first accommodating cavity, when the fan works, air enters the mosquito storage box sequentially through the first air inlet part and the second air inlet part, and then is blown out from the second air outlet part after sequentially passing through the third air outlet part and the first accommodating cavity, which forms a second air duct.

In this way, when the fan works, air enters the mosquito storage box sequentially through the first air inlet part and the second air inlet part, and then is blown out from the first air outlet part after sequentially passing through the third air outlet part and the first accommodating cavity, which forms the first air duct, and air enters the mosquito storage box sequentially through the first air inlet part and the second air inlet part, and then is blown out from the second air outlet part after sequentially passing through the third air outlet part and the first accommodating cavity, which forms the second air duct, such that when the fan of the device works, an air duct structure with a single air inlet passage and dual air outlet passages is formed. The air duct structure can be used to effectively capture surrounding mosquitoes into the mosquito storage box, and the fan is an only electricity utilization component for mosquito trapping, without any other complex mosquito trapping or exterminating facilities. Despite of a simple overall structure and a low cost, the device, due to a special structural design, achieves a mosquito trapping function. More importantly, carbon dioxide gas used for luring mosquitoes, under the action of the air duct, is quickly diffused to an upper end of the device, thereby significantly enhancing a mosquito luring effect.

The first net cover is provided with a downwardly recessed groove, an upper end part of the second net cover is located in the groove, and the first air outlet part and the discharge hole are both arranged on a side wall of the groove. In this way, the groove is formed in the first net cover, which increases an air outlet area and reduces an air output force, and the first air outlet part and the discharge hole are arranged on the side wall of the groove, such that an air outlet direction is perpendicular to an air inlet direction, and an air outlet surrounds an air inlet, which not only avoids interference with the air inlet but also promotes the diffusion of carbon dioxide gas, thereby enhancing the luring effect.

The carbon dioxide mosquito luring part includes a carbon dioxide reservoir and a pressure reducing valve, the carbon dioxide reservoir is mounted in the main body, the pressure reducing valve is mounted in the main body and matches an air outlet end of the carbon dioxide reservoir, and the pressure reducing valve is communicated with the discharge hole or the first accommodating cavity.

In some embodiments, the carbon dioxide-lured mosquito trapping device further includes a control part, and the carbon dioxide mosquito luring part further includes a flow regulation switch and a solenoid valve, where the flow regulation switch is connected to the pressure reducing valve, the solenoid valve is connected to the flow regulation switch, and the control part is mounted in the main body and is electrically connected to the solenoid valve and the fan. In this way, the flow regulation switch is configured for regulating output flow, and the solenoid valve is configured for opening or closing the air outlet.

In some embodiments, the carbon dioxide-lured mosquito trapping device further includes a carbon dioxide concentration detector, and the carbon dioxide concentration detector is mounted in the first accommodating cavity and is electrically connected to the control part. In this way, the carbon dioxide concentration detector can be used to monitor a concentration of carbon dioxide gas.

In some embodiments, the carbon dioxide-lured mosquito trapping device further includes an alarm, the alarm is mounted in the main body and is electrically connected to the control part, and the alarm is configured for sounding an alarm when the carbon dioxide concentration detector detects that the concentration of carbon dioxide gas exceeds a set threshold. In this way, the alarm is capable of sounding an alarm when the carbon dioxide concentration detector detects that the concentration of carbon dioxide gas exceeds the set threshold, to remind a user to manually reduce gas output or turn it off; and when the carbon dioxide concentration detector detects that the concentration of carbon dioxide gas remains unchanged in both open and closed states, it is generally believed that a reserve in the carbon dioxide reservoir is insufficient and nearly used up.

In some embodiments, the carbon dioxide-lured mosquito trapping device further includes a side cover, an accommodating groove is formed on a side surface of the main body, the carbon dioxide reservoir is mounted in the accommodating groove, and the side cover is detachably connected to the main body and is configured for covering the accommodating groove. In this way, this design facilitates disassembly, inspection or replacement of the carbon dioxide reservoir.

In some embodiments, the first air outlet part is the discharge hole.

The present disclosure has the following beneficial effects:
1. when the fan works, air enters the mosquito storage box sequentially through the first air inlet part and the second air inlet part, and then is blown out from the first air outlet part after sequentially passing through the third air outlet part and the first accommodating cavity, which forms the first air duct, and air enters the mosquito storage box sequentially through the first air inlet part and the second air inlet part, and then is blown out from the second air outlet part after sequentially passing through the third air outlet part and the first accommodating cavity, which forms the second air duct, such that when the fan of the device works, an air duct structure with a single air inlet passage and dual air outlet passages is formed; the air duct structure can be used to effectively capture surrounding mosquitoes into the mosquito storage box, and the fan is an only electricity utilization component for mosquito trapping, without any other complex mosquito trapping or exterminating facilities; despite of a simple overall structure and a low cost, the device, due to a special structural design, achieves a mosquito trapping function;
2. the groove is formed in the first net cover, which increases an air outlet area and reduces an air output force, and the first air outlet part is arranged on a wall of the groove, such that an air outlet direction is perpendicular to an air inlet direction, and an air outlet surrounds an air inlet, which not only avoids interference with the air inlet; and
3. carbon dioxide gas used for luring mosquitoes, under the action of the air duct, is quickly diffused to an upper end of the device, thereby achieving a good mosquito luring effect.

### BRIEF DESCRIPTION OF THE DRAWINGS

FIG. 1 is a schematic diagram of a three-dimensional structure of a carbon dioxide-lured mosquito trapping device according to an embodiment of the present disclosure.
FIG. 2 is a schematic diagram of a three-dimensional structure of the carbon dioxide-lured mosquito trapping device illustrated in FIG. 1 with a partial structure omitted.
FIG. 3 is a schematic diagram of an overhead structure of the carbon dioxide-lured mosquito trapping device illustrated in FIG. 2.
FIG. 4 is a schematic diagram of a sectional structure of the carbon dioxide-lured mosquito trapping device illustrated in FIG. 3 in an A-A direction.
FIG. 5 is a schematic diagram of a three-dimensional structure of the carbon dioxide-lured mosquito trapping device illustrated in FIG. 2 with a partial structure omitted.
FIG. 6 is an enlarged view of a part B of the carbon dioxide-lured mosquito trapping device illustrated in FIG. 5.
FIG. 7 is a schematic diagram I of an exploded structure of the carbon dioxide-lured mosquito trapping device illustrated in FIG. 2.
FIG. 8 is a schematic diagram II of an exploded structure of the carbon dioxide-lured mosquito trapping device illustrated in FIG. 2.
FIG. 9 is a schematic diagram of a three-dimensional structure of a second net cover of the carbon dioxide-lured mosquito trapping device illustrated in FIG. 8.

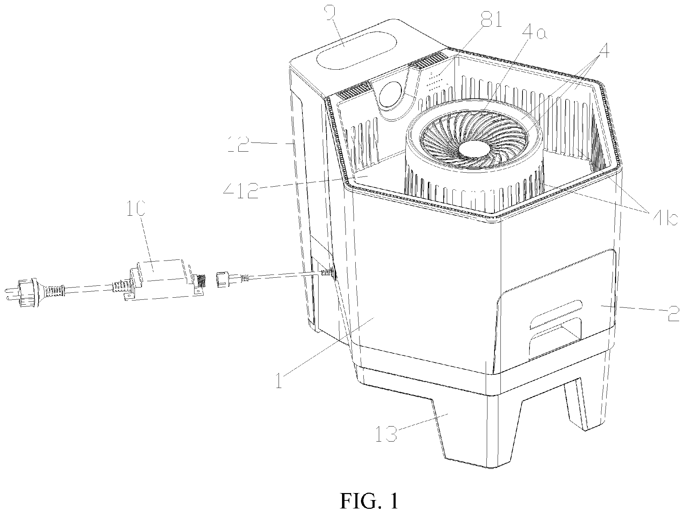

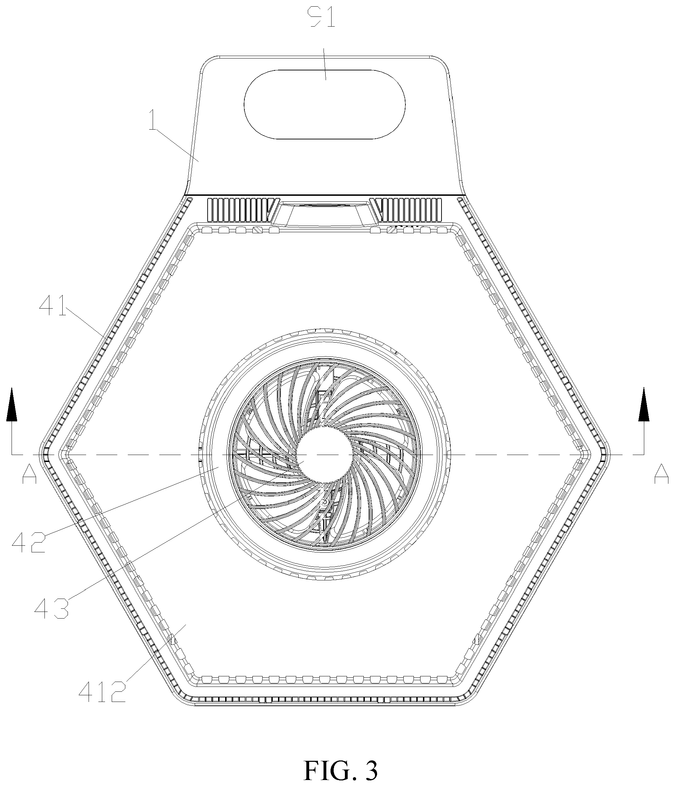

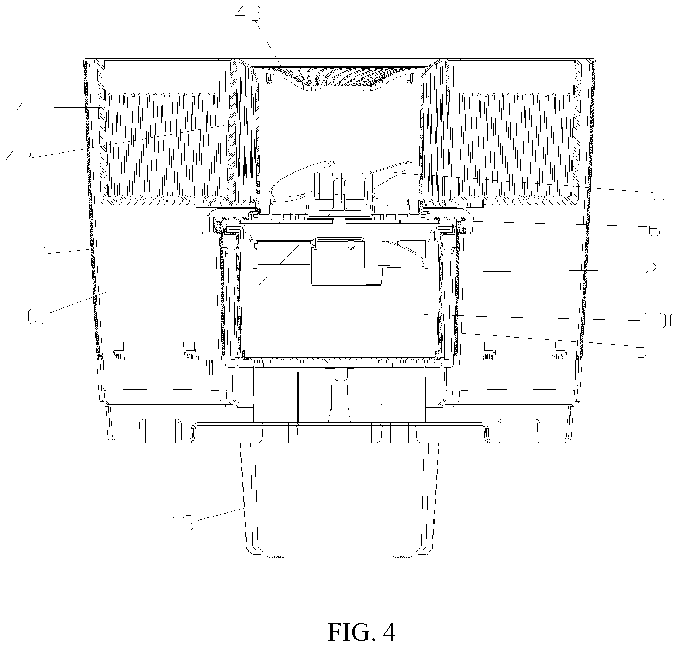

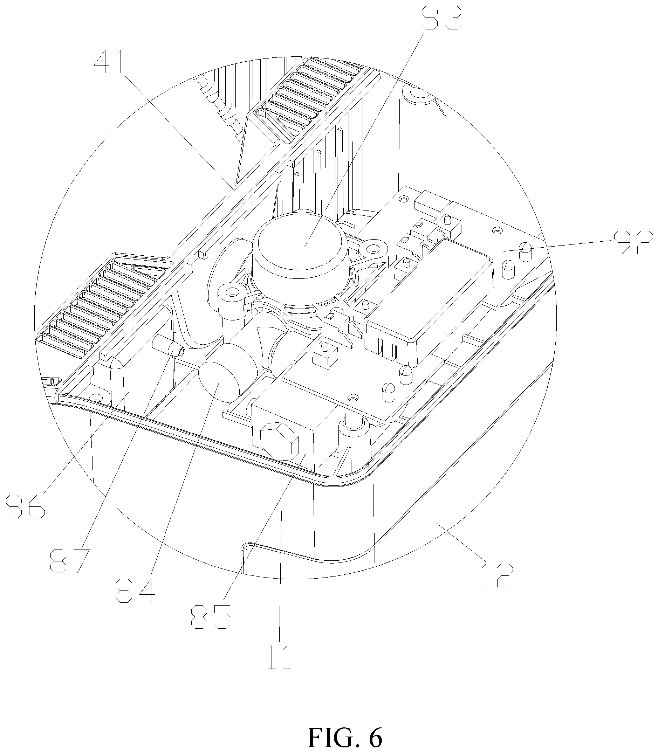

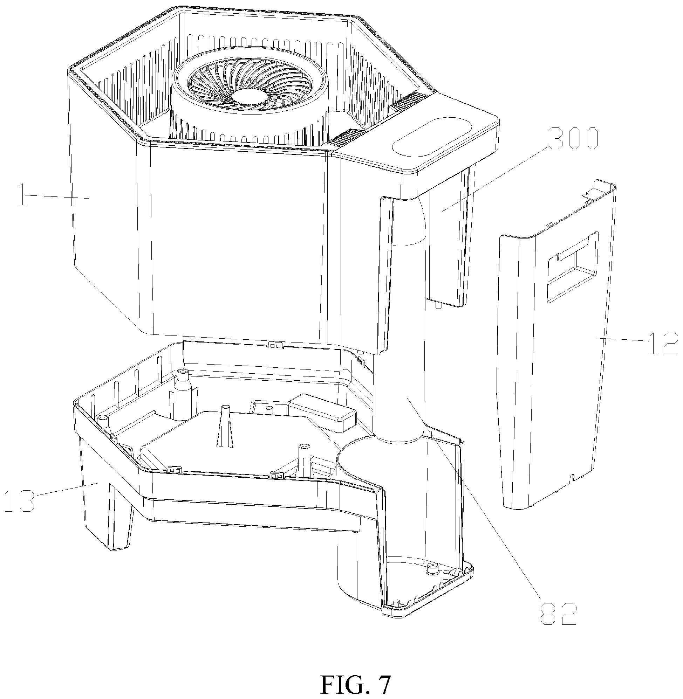

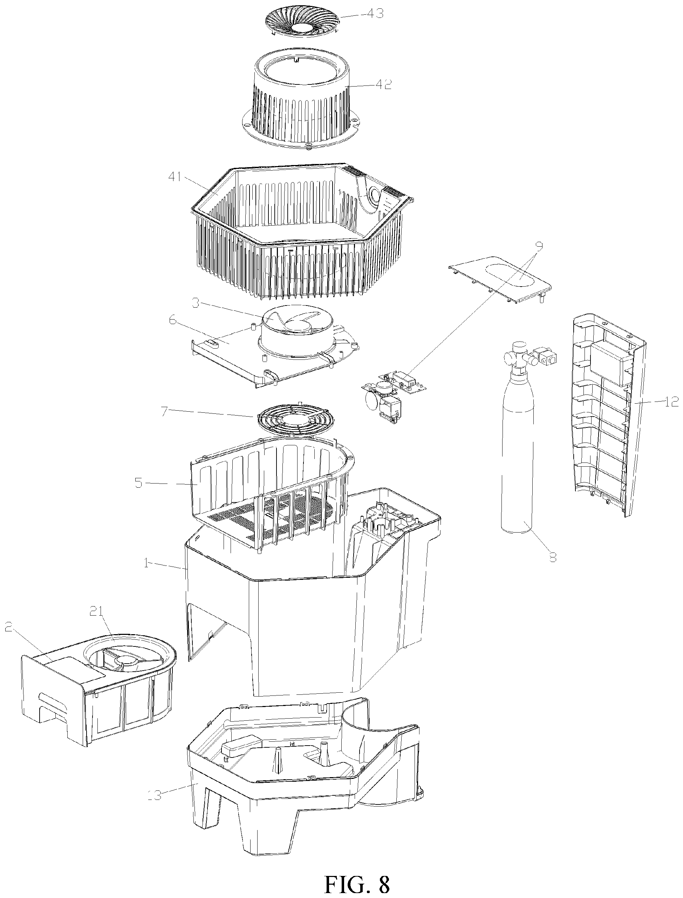

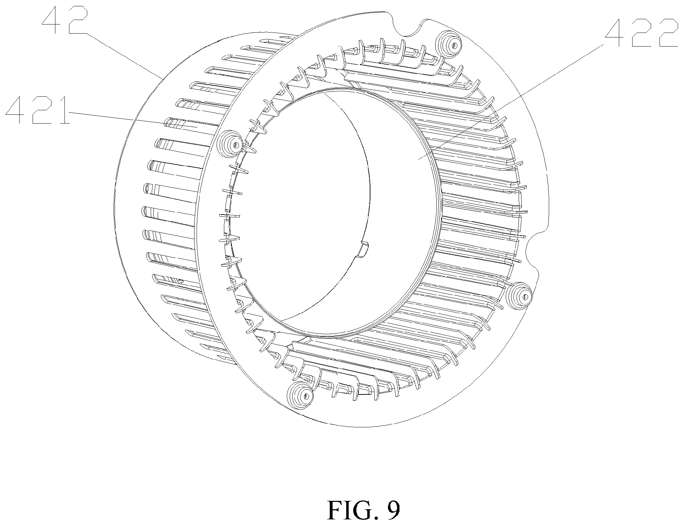

Reference numerals in FIGs. 1-9: 1. main body; 2. mosquito storage box; 3. fan; 4. net cover assembly; 5. support; 6. support cover; 7. padding plate; 8. carbon dioxide mosquito luring part; 9. control part; 10. power supply part; 12. side cover; 13. base; 4a. air inlet part; 4b. air outlet part; 41. first net cover; 42. second net cover; 43. third net cover; 50. second accommodating space; 81. discharge hole; 82. carbon dioxide reservoir; 83. pressure reducing valve; 84. flow regulation switch; 85. solenoid valve; 86. box body; 87. exhaust pipe; 91. control panel; 92. control circuit board; 100. first accommodating cavity; 200. second accommodating cavity; 101. power plug; 21. second air inlet part; 300. accommodating groove; 411. first air outlet part; 412. groove; 421. second air outlet part; 422. second protruding part; and 431. first air inlet part.

### DETAILED DESCRIPTIONS OF THE EMBODIMENTS

The present disclosure will be further described below with reference to the accompanying drawings and specific embodiments.

### Example 1

FIGs. 1-9 schematically illustrate a carbon dioxide-lured mosquito trapping device according to an embodiment of the present disclosure.

As illustrated in FIGs. 1-9, the carbon dioxide-lured mosquito trapping device includes a main body 1, as well as a net cover assembly 4, a fan 3, and a mosquito storage box 2 that are sequentially arranged from top to bottom in a height direction of the main body 1. The net cover assembly 4 is provided with an air inlet part 4a and an air outlet part 4b, and under the action of the fan 3, air enters the mosquito storage box 2 from the air inlet part 4a and is finally discharged from the air outlet part 4b;
a carbon dioxide mosquito luring part 8 configured for generating carbon dioxide gas arranged on a side of the main body 1 is further included; and
the carbon dioxide mosquito luring part 8 at least includes a discharge hole 81 formed in the net cover assembly 4 for outputting carbon dioxide gas.

The net cover assembly 4 is arranged at an upper end part of the main body 1 and forms a first accommodating cavity 100 together with the main body 1, and the net cover assembly 4 includes a first net cover 41, a second net cover 42, and a third net cover 43, where the first net cover 41 is mounted at the upper end part of the main body 1, the second net cover 42 is mounted around a middle part of the first net cover 41 in a sleeved manner and located at an outer periphery of the fan 3, the third net cover 43 is mounted on top of the second net cover 42 and located directly above the fan 3, and the discharge hole 81 is formed in the first net cover 41;
the air inlet part 4a includes a first air inlet part 431 arranged on the third net cover 43 and matches the fan 3, and a second air inlet part 21 arranged in the mosquito storage box 2 and located directly below the fan 3;
the air outlet part 4b includes a first air outlet part 411 arranged on the first net cover 41 and communicated with the first accommodating cavity 100, and a third air outlet part arranged in the mosquito storage box 2 and communicated with the first accommodating cavity 100; and
when the fan 3 works, air enters the mosquito storage box 2 sequentially through the first air inlet part 431 and the second air inlet part, and then is blown out from the first air outlet part 411 after sequentially passing through the third air outlet part and the first accommodating cavity 100, which forms a first air duct.

The air outlet part 4b further includes a second air outlet part 421 arranged on the second net cover 42 and communicated with the first accommodating cavity 100, when the fan 3 works, air enters the mosquito storage box 2 sequentially through the first air inlet part 431 and the second air inlet part 21, and then is blown out from the second air outlet part 421 after sequentially passing through the third air outlet part and the first accommodating cavity 100, which forms a second air duct.

In this way, when the fan 3 works, air enters the mosquito storage box 2 sequentially through the first air inlet part 431 and the second air inlet part 21, and then is blown out from the first air outlet part 411 after sequentially passing through the third air outlet part and the first accommodating cavity 100, which forms the first air duct, and air enters the mosquito storage box 2 sequentially through the first air inlet part 431 and the second air inlet part 21, and then is blown out from the second air outlet part 421 after sequentially passing through the third air outlet part and the first accommodating cavity 100, which forms the second air duct, such that when the fan 3 of the device works, an air duct structure with a single air inlet passage and dual air outlet passages is formed. The air duct structure can be used to effectively capture surrounding mosquitoes into the mosquito storage box 2, and the fan 3 is an only electricity utilization component for mosquito trapping, without any other complex mosquito trapping or exterminating facilities. Despite of a simple overall structure and a low cost, the device, due to a special structural design, achieves a mosquito trapping function. More importantly, carbon dioxide gas used for luring mosquitoes, under the action of the air duct, is quickly diffused to an upper end of the device, thereby significantly enhancing a mosquito luring effect.

The first net cover 41 is provided with a downwardly recessed groove 412, an upper end part of the second net cover 42 is located in the groove 412, and the first air outlet part 411 and the discharge hole 81 are both arranged on a side wall of the groove 412. In this way, the groove 412 is formed in the first net cover 41, which increases an air outlet area and reduces an air output force, and the first air outlet part 411 and the discharge hole 81 are arranged on the side wall of the groove 412, such that an air outlet direction is perpendicular to an air inlet direction, and an air outlet surrounds an air inlet, which not only avoids interference with the air inlet but also promotes the diffusion of carbon dioxide gas, thereby enhancing the luring effect.

The carbon dioxide mosquito luring part 8 includes a carbon dioxide reservoir 82 and a pressure reducing valve 83, the carbon dioxide reservoir 82 is mounted in the main body 1, the pressure reducing valve 83 is mounted in the main body 1 and matches an air outlet end of the carbon dioxide reservoir 82, and the pressure reducing valve 83 is communicated with the discharge hole 81 or the first accommodating cavity 100.

The carbon dioxide-lured mosquito trapping device further includes a control part 9, and the carbon dioxide mosquito luring part 8 further includes a flow regulation switch 84 and a solenoid valve 85, where the flow regulation switch 84 is connected to the pressure reducing valve 83, the solenoid valve 85 is connected to the flow regulation switch 84, and the control part 9 is mounted in the main body 1 and is electrically connected to the solenoid valve 85 and the fan 3. The flow regulation switch 84 is configured for regulating output flow, and the solenoid valve 85 is configured for opening or closing the air outlet. The flow regulation switch 84 can be connected to the discharge hole 81 through a pipeline.

The carbon dioxide-lured mosquito trapping device further includes a carbon dioxide concentration detector (not shown in the figure), and the carbon dioxide concentration detector is mounted in the first accommodating cavity 100 and is electrically connected to the control part 9. In this way, the carbon dioxide concentration detector can be used to monitor a concentration of carbon dioxide gas, which facilitates timely regulation or replacement.

The carbon dioxide-lured mosquito trapping device further includes an alarm, the alarm is mounted in the main body 1 and is electrically connected to the control part 9, and the alarm is configured for sounding an alarm when the carbon dioxide concentration detector detects that the concentration of carbon dioxide gas exceeds a set threshold.

The control part 9 in this embodiment includes a control panel 91 and a control circuit board 92 that matches the control panel 91, and the control circuit board 92 is electrically connected to all electricity utilization components.

The concentration of carbon dioxide gas can be displayed on the control panel 91.

The alarm is capable of sounding an alarm when the carbon dioxide concentration detector detects that the concentration of carbon dioxide gas exceeds the set threshold, to remind a user to manually reduce gas output or turn it off; and
when the carbon dioxide concentration detector detects that the concentration of carbon dioxide gas displayed on the control panel 91 remains unchanged in both open and closed states, it is generally believed that a reserve in the carbon dioxide reservoir 82 is insufficient and nearly used up.

The carbon dioxide-lured mosquito trapping device further includes a side cover 12, an accommodating groove 300 is formed on a side surface of the main body 1, the carbon dioxide reservoir 82 is mounted in the accommodating groove 300, and the side cover 12 is detachably connected to the main body 1 and is configured for covering the accommodating groove 300. In this way, this design facilitates disassembly, inspection or replacement of the carbon dioxide reservoir 82.

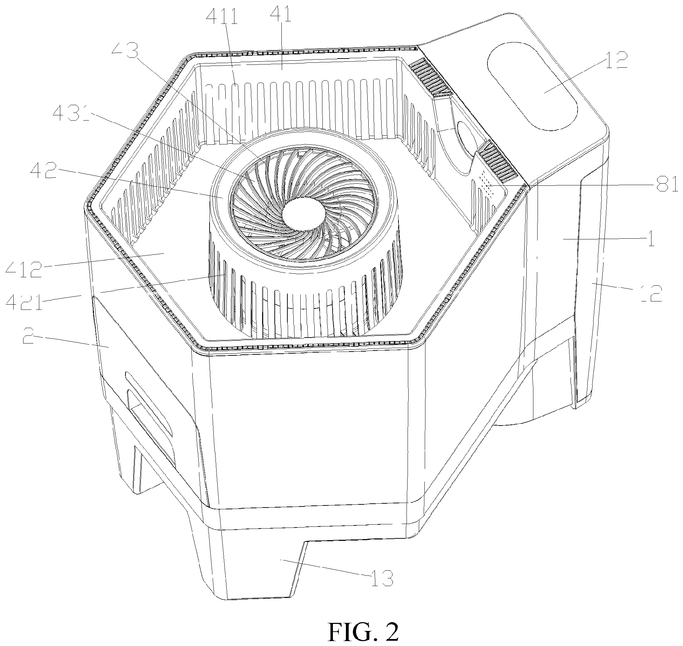

As illustrated in FIGs. 2-9, a mounting surface of the control part 9 is flush with an upper end face of the main body 1, resulting in an aesthetically pleasing appearance. A base 13 is arranged at a bottom of the main body 1, the base 13 matches the side cover 12, and an accommodating cavity is formed on one side of the base 13, and together with part of the main body 1, forms the accommodating groove 300.

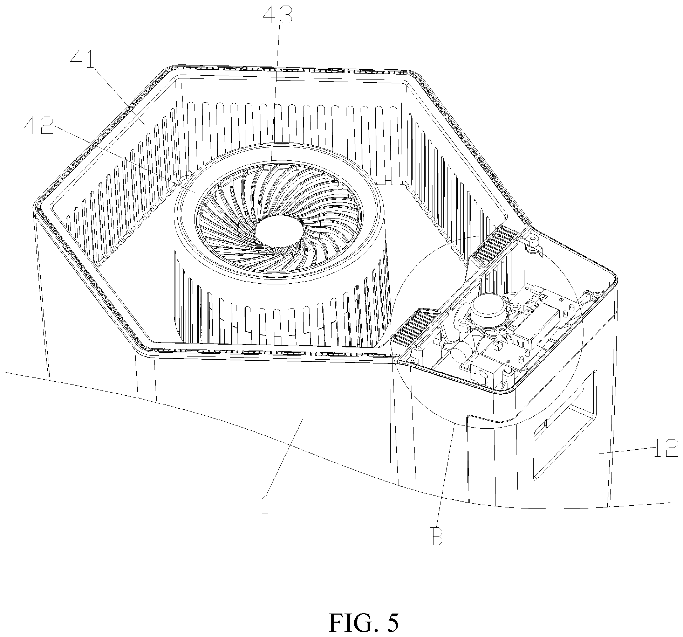

As illustrated in FIGs. 5-6, the carbon dioxide mosquito luring part 8 further includes a box body 86 and an exhaust pipe 87, the box body 86 is mounted in the main body 1 and is located behind the discharge hole 81, the discharge hole 81 is communicated with the box body 86, and the box body 86 is communicated with the flow regulation switch 84 through the exhaust pipe 87. The carbon dioxide concentration detector is arranged in the box body 87, which facilitates detection of carbon dioxide gas and protects the carbon dioxide concentration detector.

The present disclosure provides a mosquito trapping device of a brand new structure, under the action of the fan 3 of the mosquito trapping device, air enters the mosquito storage box 2 sequentially through the air inlet part 4a and is then blown out from the air outlet part 4b, the air duct structure formed can be used to effectively capture surrounding mosquitoes into the mosquito storage box 2, and the fan 3 is an only electricity utilization component for mosquito trapping, without any other complex mosquito trapping or exterminating facilities; and the carbon dioxide mosquito luring part 8 is arranged to simulate human respiration, and only carbon dioxide gas is available for mosquito luring, and is diffused under the action of the air duct, with a mosquito luring effect achieved. Despite of the simple overall structure and the low cost, the device of a simple structure achieves mosquito luring and trapping functions.

In this example, the first air outlet part 411, the second air outlet part 421, the first air inlet part 431 and the like can be various shapes of holes through which air can pass.

The carbon dioxide-lured mosquito trapping device further includes a support 5 and a support cover 6, the support 5 is mounted in the main body 1 and is provided with a second accommodating space 50 for accommodating the mosquito storage box 2, the mosquito storage box 2 is detachably mounted in the second accommodating space 50, the support cover 6 is mounted above the support 5, and the fan 3 is mounted above the support cover 6. In this way, the mosquito storage box 2 is detachably arranged, which facilitates timely cleaning of captured mosquitoes in the box, and allows for repeated use.

The mosquito storage box 2 of this example has a structure of the prior art, and a specific structure thereof will not be described in detail here.

The support cover 6 is provided with an upwardly extending first protruding part, the first protruding part forms an accommodating groove for accommodating the fan 3, a second protruding part 422 extending downward is arranged in the second net cover 42, the second protruding part 422 is connected with the first protruding part, and the second protruding part 422 is located on an inner side of the second air outlet part 421. In this way, the first protruding part and the second protruding part 422 enable to separate the air inlet passage from the air outlet passage, and this structure is also a main structure of forming the dual air outlet passages.

The carbon dioxide-lured mosquito trapping device further includes a padding plate 7, the padding plate 7 is mounted on the support cover 6 and located directly below the fan 3, the padding plate 7 and the first protruding part are enclosed to form the accommodating groove, and the padding plate 7 is provided with a first through hole communicated with the accommodating groove. In this way, the padding plate 7 plays a role of supporting the fan 3 without affecting air input.

In this example, the carbon dioxide-lured mosquito trapping device further includes a power supply part 10, and the power supply part 10 includes at least a power plug 101.

The second air inlet part 21 can be a second through hole formed at a top of the mosquito storage box 2, and the third air outlet part can be a third through hole formed at a bottom or periphery of the mosquito storage box 2.

Preferably, a sum of air output from the first air outlet part 411 of the first net cover 41 and the second air outlet part 421 of the second net cover 42 is more than six times air input from the first air inlet part 431 on the third net cover 43. In this way, it is effectively ensured that the air output force is less than an air input force, thereby facilitating mosquito trapping.

Preferably, in this example, the main body 1, the side cover 12, the mosquito storage box 2, the fan 3, the net cover assembly 4, the control panel 91 of the control part 9, and the power plug 101 of the power supply part 10 all have appearances of dark colors such as black. The dark-colored appearances can enhance the mosquito luring effect.

The present disclosure provides the mosquito trapping device of a brand new structure, when the fan 3 of the device works, the air duct structure with a single air inlet passage and dual air outlet passages is formed, the air duct structure can be used to effectively capture surrounding mosquitoes into the mosquito storage box 2, and the fan 3 is the only electricity utilization component for mosquito trapping, without any other complex mosquito trapping or exterminating facilities. Despite of the simple overall structure and the low cost, the device, due to the special structural design, achieves the mosquito trapping function.

### Example 2

A carbon dioxide-lured mosquito trapping device of this embodiment has a structure basically the same as that of the carbon dioxide-lured mosquito trapping device in Example 1, and the only difference therebetween lies in that the pipeline between the flow regulation switch 84 and the discharge hole 81 is omitted, carbon dioxide gas is directly discharged into the first accommodating cavity 100, the original discharge hole is removed, and the first air outlet part 411 of this example is the discharge hole 81. The carbon dioxide concentration detector is directly mounted in the first accommodating cavity 100.

In this way, carbon dioxide gas generated will directly enter the first accommodating cavity 100, under the action of the fan 3, then enters the groove 412 through the first air inlet, and under the action of the first air duct and the second air duct, is diffused to an upper end face of the device, thereby achieving circulation flow and a good mosquito luring effect.

The above are merely some embodiments of the present disclosure. For those of ordinary skill in the art, they may also make several transformations and improvements on the premise of not deviating from the inventive concept of the present disclosure, and these transformations and improvements shall fall within the scope of protection of the present disclosure as set forth in the appended claims.

## Claims

1. A carbon dioxide-lured mosquito trapping device, comprising a main body (1), as well as a net cover assembly (4), a fan (3), and a mosquito storage box (2) that are sequentially arranged from top to bottom in a height direction of the main body (1), wherein the net cover assembly (4) is provided with an air inlet part (4a) and an air outlet part (4b), and under the action of the fan (3), air enters the mosquito storage box (2) from the air inlet part (4a) and is finally discharged from the air outlet part (4b);
a carbon dioxide mosquito luring part (8) configured for generating carbon dioxide gas arranged on a side of the main body (1) is further comprised;
the carbon dioxide mosquito luring part (8) at least comprises a discharge hole (81) formed in the net cover assembly (4) for outputting carbon dioxide gas;
the net cover assembly (4) is arranged at an upper end part of the main body (1) and forms a first accommodating cavity (100) together with the main body (1), and the net cover assembly (4) comprises a first net cover (41), and a second net cover (42), wherein the first net cover (41) is mounted at the upper end part of the main body (1), the second net cover (42) is mounted around a middle part of the first net cover (41) in a sleeved manner and located at an outer periphery of the fan (3), and the discharge hole (81) is formed in the first net cover (41);
the air inlet part (4a) comprises a first air inlet part (431) matching the fan (3), and a second air inlet part (21) arranged in the mosquito storage box (2);
the air outlet part (4b) comprises a first air outlet part (411) arranged on the first net cover (41) and communicated with the first accommodating cavity (100), and a third air outlet part arranged in the mosquito storage box (2) and communicated with the first accommodating cavity (100);
when the fan (3) works, air enters the mosquito storage box (2) sequentially through the first air inlet part (431) and the second air inlet part, and then is blown out from the first air outlet part (411) after sequentially passing through the third air outlet part and the first accommodating cavity (100), which forms a first air duct; and
the carbon dioxide mosquito luring part (8) comprises a carbon dioxide reservoir (82) and a pressure reducing valve (83), the carbon dioxide reservoir (82) is mounted in the main body (1), the pressure reducing valve (83) is mounted in the main body (1) and matches an air outlet end of the carbon dioxide reservoir (82), and the pressure reducing valve (83) is communicated with the discharge hole (81) or the first accommodating cavity (100);
**characterized in that**
the net cover assembly (4) further comprises a third net cover (43); the third net cover (43) is mounted on top of the second net cover (42) and located directly above the fan (3); the first air inlet part (431) is arranged on the third net cover (43); and the second air inlet part (21) is located directly below the fan (3);
wherein the air outlet part (4b) further comprises a second air outlet part (421) arranged on the second net cover (42) and communicated with the first accommodating cavity (100), when the fan (3) works, air enters the mosquito storage box (2) sequentially through the first air inlet part (431) and the second air inlet part (21), and then is blown out from the second air outlet part (421) after sequentially passing through the third air outlet part and the first accommodating cavity (100), which forms a second air duct;
wherein the first net cover (41) is provided with a downwardly recessed groove (412), an upper end part of the second net cover (42) is located in the groove (412), and the first air outlet part (411) and the discharge hole (81) are both arranged on a side wall of the groove (412).

2. The carbon dioxide-lured mosquito trapping device according to claim 1, further comprising a control part (9), wherein the carbon dioxide mosquito luring part (8) further comprises a flow regulation switch (84) and a solenoid valve (85), wherein the flow regulation switch (84) is connected to the pressure reducing valve (83), the solenoid valve (85) is connected to the flow regulation switch (84), and the control part (9) is mounted in the main body (1) and is electrically connected to the solenoid valve (85) and the fan (3).

3. The carbon dioxide-lured mosquito trapping device according to claim 2, further comprising a carbon dioxide concentration detector, wherein the carbon dioxide concentration detector is mounted in the first accommodating cavity (100) and is electrically connected to the control part (9).

4. The carbon dioxide-lured mosquito trapping device according to claim 3, further comprising an alarm, wherein the alarm is mounted in the main body (1) and is electrically connected to the control part (9), and the alarm is configured for sounding an alarm when the carbon dioxide concentration detector detects that the concentration of carbon dioxide gas exceeds a set threshold.

5. The carbon dioxide-lured mosquito trapping device according to claim 1, further comprising a side cover (12), an accommodating groove (300) is formed on a side surface of the main body (1), the carbon dioxide reservoir (82) is mounted in the accommodating groove (300), and the side cover (12) is detachably connected to the main body (1) and is configured for covering the accommodating groove (300).

6. The carbon dioxide-lured mosquito trapping device according to any one of claims 1-5, wherein the first air outlet part (411) is the discharge hole (81).

## Patentansprüche

1. Vorrichtung zum Einfangen von Moskitos mittels Kohlendioxid, umfassend einen Hauptkörper (1) sowie eine Netzabdeckungsanordnung (4), einen Lüfter (3) und eine Moskitoaufbewahrungsbox (2), die in einer Höhenrichtung des Hauptkörpers (1) sequentiell von oben nach unten angeordnet sind, wobei die Netzabdeckungsanordnung (4) mit einem Lufteinlassteil (4a) und einem Luftauslassteil (4b) versehen ist und unter der Wirkung des Lüfters (3) Luft von dem Lufteinlassteil (4a) in die Moskitoaufbewahrungsbox (2) eintritt und schließlich von dem Luftauslassteil (4b) ausgestoßen wird;
ferner umfassend ein Kohlendioxid-Moskitoanlockteil (8), das zum Erzeugen von Kohlendioxidgas konfiguriert und an einer Seite des Hauptkörpers (1) angeordnet ist;
wobei das Kohlendioxid-Moskitoanlockteil (8) zumindest eine in der Netzabdeckungsanordnung (4) ausgebildete Auslassöffnung (81) zum Ausgeben von Kohlendioxidgas umfasst;
wobei die Netzabdeckungsanordnung (4) an einem oberen Endteil des Hauptkörpers (1) angeordnet ist und zusammen mit dem Hauptkörper (1) einen ersten Aufnahmeraum (100) bildet, und die Netzabdeckungsanordnung (4) eine erste Netzabdeckung (41) und eine zweite Netzabdeckung (42) umfasst, wobei die erste Netzabdeckung (41) an dem oberen Endteil des Hauptkörpers (1) montiert ist, die zweite Netzabdeckung (42) hülsenförmig um einen mittleren Teil der ersten Netzabdeckung (41) montiert ist und sich an einer äußeren Peripherie des Lüfters (3) befindet und die Auslassöffnung (81) in der ersten Netzabdeckung (41) ausgebildet ist;
wobei das Lufteinlassteil (4a) einen ersten Lufteinlassteil (431), der mit dem Lüfter (3) zusammenwirkt, und einen zweiten Lufteinlassteil (21), der in der Moskitoaufbewahrungsbox (2) angeordnet ist, umfasst;
wobei das Luftauslassteil (4b) einen ersten Luftauslassteil (411), der an der ersten Netzabdeckung (41) angeordnet ist und mit dem ersten Aufnahmeraum (100) verbunden ist, und einen dritten Luftauslassteil, der in der Moskitoaufbewahrungsbox (2) angeordnet ist und mit dem ersten Aufnahmeraum (100) verbunden ist, umfasst;
wobei, wenn der Lüfter (3) arbeitet, Luft nacheinander durch den ersten Lufteinlassteil (431) und den zweiten Lufteinlassteil in die Moskitoaufbewahrungsbox (2) eintritt und anschließend nach nacheinander erfolgendem Durchströmen des dritten Luftauslassteils und des ersten Aufnahmeraums (100) von dem ersten Luftauslassteil (411) ausgeblasen wird, wodurch ein erster Luftkanal gebildet wird; und
wobei das Kohlendioxid-Moskitoanlockteil (8) einen Kohlendioxidbehälter (82) und ein Druckminderventil (83) umfasst, wobei der Kohlendioxidbehälter (82) in dem Hauptkörper (1) montiert ist, das Druckminderventil (83) in dem Hauptkörper (1) montiert ist und mit einem Auslassende des Kohlendioxidbehälters (82) zusammenwirkt und das Druckminderventil (83) mit der Auslassöffnung (81) oder dem ersten Aufnahmeraum (100) verbunden ist;
**dadurch gekennzeichnet, dass**
die Netzabdeckungsanordnung (4) ferner eine dritte Netzabdeckung (43) umfasst; die dritte Netzabdeckung (43) auf der zweiten Netzabdeckung (42) montiert ist und sich direkt oberhalb des Lüfters (3) befindet; der erste Lufteinlassteil (431) an der dritten Netzabdeckung (43) angeordnet ist; und der zweite Lufteinlassteil (21) sich direkt unterhalb des Lüfters (3) befindet;
wobei das Luftauslassteil (4b) ferner einen zweiten Luftauslassteil (421) umfasst, der an der zweiten Netzabdeckung (42) angeordnet ist und mit dem ersten Aufnahmeraum (100) verbunden ist, wobei, wenn der Lüfter (3) arbeitet, Luft nacheinander durch den ersten Lufteinlassteil (431) und den zweiten Lufteinlassteil (21) in die Moskitoaufbewahrungsbox (2) eintritt und anschließend nach nacheinander erfolgendem Durchströmen des dritten Luftauslassteils und des ersten Aufnahmeraums (100) von dem zweiten Luftauslassteil (421) ausgeblasen wird, wodurch ein zweiter Luftkanal gebildet wird;
wobei die erste Netzabdeckung (41) mit einer nach unten vertieften Nut (412) versehen ist, ein oberes Endteil der zweiten Netzabdeckung (42) sich in der Nut (412) befindet und der erste Luftauslassteil (411) sowie die Auslassöffnung (81) beide an einer Seitenwand der Nut (412) angeordnet sind.

2. Vorrichtung zum Einfangen von Moskitos mittels Kohlendioxid nach Anspruch 1, ferner umfassend ein Steuerungsteil (9), wobei das Kohlendioxid-Moskitoanlockteil (8) ferner einen Durchflussregelungsschalter (84) und ein Magnetventil (85) umfasst, wobei der Durchflussregelungsschalter (84) mit dem Druckminderventil (83) verbunden ist, das Magnetventil (85) mit dem Durchflussregelungsschalter (84) verbunden ist und das Steuerungsteil (9) in dem Hauptkörper (1) montiert ist und elektrisch mit dem Magnetventil (85) und dem Lüfter (3) verbunden ist.

3. Vorrichtung zum Einfangen von Moskitos mittels Kohlendioxid nach Anspruch 2, ferner umfassend einen Kohlendioxidkonzentrationsdetektor, wobei der Kohlendioxidkonzentrationsdetektor in dem ersten Aufnahmeraum (100) montiert ist und elektrisch mit dem Steuerungsteil (9) verbunden ist.

4. Vorrichtung zum Einfangen von Moskitos mittels Kohlendioxid nach Anspruch 3, ferner umfassend einen Alarm, wobei der Alarm in dem Hauptkörper (1) montiert ist und elektrisch mit dem Steuerungsteil (9) verbunden ist und der Alarm zur Ausgabe eines Alarms eingerichtet ist, wenn der Kohlendioxidkonzentrationsdetektor erkennt, dass die Konzentration des Kohlendioxidgases einen eingestellten Schwellenwert überschreitet.

5. Vorrichtung zum Einfangen von Moskitos mittels Kohlendioxid nach Anspruch 1, ferner umfassend eine Seitenabdeckung (12), wobei an einer Seitenfläche des Hauptkörpers (1) eine Aufnahmenut (300) ausgebildet ist, der Kohlendioxidbehälter (82) in der Aufnahmenut (300) montiert ist und die Seitenabdeckung (12) lösbar mit dem Hauptkörper (1) verbunden ist und zum Abdecken der Aufnahmenut (300) eingerichtet ist.

6. Vorrichtung zum Einfangen von Moskitos mittels Kohlendioxid nach einem der Ansprüche 1 bis 5, wobei der erste Luftauslassteil (411) die Auslassöffnung (81) ist.

## Revendications

1. Dispositif de piège à moustiques à dioxyde de carbone, comprenant un corps principal (1), ainsi qu'un ensemble couvercle à filet (4), un ventilateur (3), et une boîte de stockage de moustiques (2) qui sont disposés en séquence de haut en bas dans une direction de la hauteur du corps principal (1), dans lequel l'ensemble couvercle à filet (4) est pourvu d'une partie d'entrée d'air (4a) et d'une partie de sortie d'air (4b), et sous l'action du ventilateur (3), de l'air entre dans la boîte de stockage de moustiques (2) à partir de la partie d'entrée d'air (4a) et est finalement évacué à travers la partie de sortie d'air (4b) ;
une partie d'attraction de moustiques par dioxyde de carbone (8) configurée pour générer du gaz de dioxyde de carbone disposée sur un côté du corps principal (1) est en outre incluse ;
la partie d'attraction de moustiques par dioxyde de carbone (8) comprend au moins un trou d'évacuation (81) formé dans l'ensemble de couvercle à filet (4) pour délivrer en sortie du gaz de dioxyde de carbone ;
l'ensemble couvercle à filet (4) est disposé au niveau d'une partie d'extrémité supérieure du corps principal (1) et forme une première cavité de réception (100) avec le corps principal (1), et l'ensemble couvercle à filet (4) comprend un premier couvercle à filet (41), et un deuxième couvercle à filet (42), dans lequel le premier couvercle à filet (41) est monté au niveau de la partie d'extrémité supérieure du corps principal (1), le deuxième couvercle à filet (42) est monté autour d'une partie médiane du premier couvercle à filet (41) de façon emmanchée et situé au niveau d'une périphérie externe du ventilateur (3), et le trou d'évacuation (81) est formé dans le premier couvercle à filet (41) ;
la partie d'entrée d'air (4a) comprend une première partie d'entrée d'air (431) en correspondance avec le ventilateur (3), et une deuxième partie d'entrée d'air (21) disposée dans la boîte de stockage de moustiques (2) ;
la partie de sortie d'air (4b) comprend une première partie de sortie d'air (411) disposée sur le premier couvercle à filet (41) et en communication avec la première cavité de réception (100), et une troisième partie de sortie d'air disposée dans la boîte de stockage de moustiques (2) et en communication avec la première cavité de réception (100) ;
lorsque le ventilateur (3) est en fonctionnement, de l'air entre dans la boîte de stockage de moustiques (2) en séquence à travers la première partie d'entrée d'air (431) et la deuxième partie d'entrée d'air, puis est soufflé à travers la première partie de sortie d'air (411) après avoir traversé en séquence la troisième partie de sortie d'air et la première cavité de réception (100), qui forme un premier conduit d'air ; et
la partie d'attraction de moustiques à dioxyde de carbone (8) comprend un réservoir de dioxyde de carbone (82) et une soupape de réduction de pression (83), le réservoir de dioxyde de carbone (82) est monté dans le corps principal (1), la soupape de réduction de pression (83) est montée dans le corps principal (1) et est en correspondance avec une extrémité de sortie d'air du réservoir de dioxyde de carbone (82), et la soupape de réduction de pression (83) est en communication avec le trou d'évacuation (81) ou la première cavité de réception (100) ;
**caractérisé en ce que**
l'ensemble couvercle à filet (4) comprend en outre un troisième couvercle à filet (43) ; le troisième couvercle à filet (43) est monté sur le dessus du deuxième couvercle à filet (42) et situé directement en-dessus du ventilateur (3) ; la première partie d'entrée d'air (431) est disposée sur le troisième couvercle à filet (43) ; et la deuxième partie d'entrée d'air (21) est située directement en-dessous du ventilateur (3) ;
dans lequel la partie de sortie d'air (4b) comprend en outre une deuxième partie de sortie d'air (421) disposée sur le deuxième couvercle à filet (42) et en communication avec la première cavité de réception (100), lorsque le ventilateur (3) est en fonctionnement, de l'air entre dans la boîte de stockage de moustiques (2) en séquence à travers la première partie d'entrée d'air (431) et la deuxième partie d'entrée d'air (21), puis est soufflé hors de la deuxième partie de sortie d'air (421) après avoir traversé en séquence la troisième partie de sortie d'air et la première cavité de réception (100), qui forme un deuxième conduit d'air ;
dans lequel le premier couvercle à filet (41) est pourvu d'une rainure renfoncée vers le bas (412), une partie d'extrémité supérieure du deuxième couvercle à filet (42) est située dans la rainure (412), et la première partie de sortie d'air (411) et le trou d'évacuation (81) sont tous les deux disposés sur une paroi latérale de la rainure (412).

2. Dispositif de piège à moustiques à attraction par dioxyde de carbone selon la revendication 1, comprenant en outre une partie de commande (9), dans lequel la partie d'attraction de moustiques par dioxyde de carbone (8) comprend en outre un commutateur de régulation de débit (84) et une électrovanne (85), dans lequel le commutateur de régulation de débit (84) est relié à la soupape de réduction de pression (83), l'électrovanne (85) est reliée au commutateur de régulation de débit (84), et la partie de commande (9) est montée dans le corps principal (1) et est reliée électriquement à l'électrovanne (85) et au ventilateur (3).

3. Dispositif de piège à moustiques à attraction par dioxyde de carbone selon la revendication 2, comprenant en outre un détecteur de concentration de dioxyde de carbone, dans lequel le détecteur de concentration de dioxyde de carbone est monté dans la première cavité de réception (100) et est relié électriquement à la partie de commande (9).

4. Dispositif de piège à moustiques à attraction par dioxyde de carbone selon la revendication 3, comprenant en outre une alarme, dans lequel l'alarme est montée dans le corps principal (1) et est reliée électriquement à la partie de commande (9), et l'alarme est configurée pour sonner une alarme lorsque le détecteur de concentration de dioxyde de carbone détecte que la concentration de dioxyde de carbone gazeux dépasse un seuil défini.

5. Dispositif de piège à moustiques à attraction par dioxyde de carbone selon la revendication 1, comprenant en outre un couvercle latéral (12), une rainure de réception (300) est formée sur une surface latérale du corps principal (1), le réservoir de dioxyde de carbone (82) est monté dans la rainure de réception (300), et le couvercle latéral (12) est relié de manière amovible au corps principal (1) et est configuré pour recouvrir la rainure de réception (300).

6. Dispositif de piège à moustiques à attraction par dioxyde de carbone selon l'une quelconque des revendications 1-5, dans lequel la première partie de sortie d'air (411) est le trou d'évacuation (81).
